# EUROPEAN PATENT APPLICATION

(11) **EP 2 048 651 A1**
(43) Date of publication of application: **15.04.2009**
(21) Application number: 08162265.6
(22) Date of filing: 12.08.2008
(51) Int. Cl.: G09G 5/00, G06F 3/14

(54) **Apparatus, system, and method for displaying**

(30) Priority: 10.10.2007 KR 20070102019
(71) Applicant: Samsung Electronics Co., Ltd., Suwon-si, Gyeonggi-Do (KR)
(72) Inventor: Kim, Young-Chan, Uiwang-si Gyeonggi-do (KR); Kim, Yong-hyun, Seongnam-si Gyeonggi-do (KR)
(74) Representative: Grootscholten, Johannes A.M.

(57) **Abstract**

A display device, system, and method are provided. A host device of the display system controls to scale an area of a screen on a first display device, and to display the area on a second display device. The resolution of a part of the screen on the first display device can be changed and the part of the screen is displayed on the second display device with the changed resolution. Therefore, a plurality of display devices are efficiently used using one host device.

## Description

### CROSS-REFERENCE TO RELATED APPLICATIONS

This application claims priority from Korean Patent Application No. 10-2007-102019, filed on October 10, 2007, in the Korean Intellectual Property Office, the disclosure of which is incorporated herein by reference in its entirety.

### BACKGROUND OF THE INVENTION

### 1. Field of the Invention

Apparatuses, systems, and methods consistent with the present invention relate to displaying, and more particularly, to displaying an area of a screen on a display device.

### 2. Description of the Related Art

A display apparatus such as a monitor displays an image transmitted from a personal computer (PC) on a screen. The monitor is generally connected to the PC using Digital Visual Interface (DVI) or D-subminiature (D-SUB).

A method for transmitting an image from the PC to the monitor is expected to provide an enhanced image resolution and moving picture. A method for efficiently transmitting an image from the PC to the monitor is required even when the monitor is connected to the PC compliant with standards other than DVI or D-sub.

Generally, one monitor has been connected to one PC, but more than one monitor is increasingly used in connection with the PC.

Accordingly, a method for efficiently using a plurality of monitors through one PC is required.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

The present invention provides a display device, system, and method to efficiently transmit an image from a host device to a display device.

The present invention also provides a display device, system, and method in which a user efficiently uses a plurality of display devices through one host device.

According to an exemplary aspect of the present invention, there is provided a display system comprising a host device; a first display device which communicates with the host device; and a second display device which communicates with the host device, and wherein the host device controls the second display device to scale and display an area of the screen displayed on the first display device.

The first display device may communicate with the host device according to a Display Data Channel (DDC) communication standard.

The second display device may communicate with the host device according to a Universal Serial Bus (USB) communication standard.

The area of the screen may correspond to an image on the area of the screen.

The area of the screen on the first display device may correspond to a window on the area of the screen.

If the window is scaled and displayed on the second display device, the window is not displayed on the first display device.

The host device may convert image data of the area into a USB data format, and transmit the converted image data to the second display device according to the USB communication standard, and the second display device may restore the USB data received from the host device into image data, and scale the area using the restored image data, and display the area.

The host device may convert the image data of the screen and location information of the area into a USB data format and transmit the converted image data and the location information of the area to the second display device according to the USB communication standard; and the second display device may restore the image data of the area from the image data according to the location information, scales the resolution of the area using the restored image data of the area, and displays the scaled area.

The second device may compute a scaling ratio based on a resolution of the area.

The scaling ratio may be computed by dividing a resolution of the second display by the resolution of the area.

If a user selects the area on the first display device, the host device may control to scale the area and display the scaled area on the second display device.

According to another exemplary aspect of the present invention, there is provided a display method, comprising displaying a screen on a first display device; and scaling and displaying on a second display device an area of the screen displayed on the first display device.

The scaling and displaying on the second device the area of the screen displaying on the first display device may comprise transmitting image data of the area to the second display device and scaling, by the second display device, the area using the image data and displaying the scaled area.

The transmitting the image data may comprise converting image data of the area into a USB data format; and transmitting the converted image data to the second display device according to the USB communication standard.

The area may correspond to an image on the area of the screen.

The area may correspond to a window on the area of the screen.

The scaling and displaying on the second device, the area of the screen displayed on the first displaying device may comprise transmitting image data of the screen on the first display device and location information of the area to the second display device; extracting, by the second display device, image data of the area from the image data according to the location information and scaling, by the second display device, the area using the extracted image data, and displaying the scaled area.

The transmitting the image data and the location information may comprise converting the image data of the screen and the location information of the area into a USB data format; and transmitting the converted data to the second display device according to the USB communication standard.

The scaling of the area may comprise computing a scaling ratio based on a resolution of the area.

The scaling ratio may be computed by dividing a resolution of the second display by the resolution of the area.

According to another exemplary aspect of the present invention, there is provided a display device, comprising a communication interface which is connected to a host device for data communication; a display which displays a screen received from the host device through the communication interface; and a control unit which scales an area of the screen on the display, and displays the scaled area on the display.

The communication interface may be connected to the host device for data communication according to a universal serial bus (USB) communication standard, and the control unit may receive in a USB data format image data of the area from the host device through the communication interface, and scale the area using the received USB data.

The area may correspond to an image on the area of the screen.

The area may correspond to a window on the area of the screen.

The communication interface may be connected to the host device for data communication according to the USB communication standard, and the control unit may receive image data of the screen and location information of the area from the host device through the communication interface in a USB data format, and extract image data of the area from the image data according to the location information in USB data, and scale the area using the extracted image data.

According to another exemplary aspect of the present invention, there is provided a host device-readable recording medium, recording thereon a program for executing a displaying method comprising: displaying a screen on a first display device; and scaling and displaying an area of the screen on the second display device an area of the screen displayed on the first display device.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a view illustrating a display system applicable to an exemplary embodiment of the present invention;

FIG. 2 is a block diagram illustrating a PC and a USB monitor of FIG. 1;

FIG. 3 is a flowchart illustrating a method for displaying according to an exemplary embodiment of the present invention;

FIG. 4A is a view illustrating an image displayed on a USB monitor by performing operation S3 80 of FIG. 3;

FIG. 4B is a view illustrating an image displayed on a USB monitor by performing operation S470;

FIG. 5 is a flowchart illustrating a method for displaying according to another exemplary embodiment of the present invention;

FIG. 6 is a view illustrating an operation S610 of FIG. 3;

FIG. 7 is a view illustrating a display system according to another exemplary embodiments of the present invention;

FIG. 8 is a block diagram illustrating a PC, a USB monitor, and a DVI monitor of FIG. 7;

FIG. 9 is a flowchart illustrating a method for displaying according to another exemplary embodiment of the present invention;

FIG. 10A is a view illustrating the result generated by performing operation S950;

FIG. 10B is a view illustrating the result generated by performing operation S1050; and

FIG. 11 is a flowchart illustrating a method for displaying according to another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

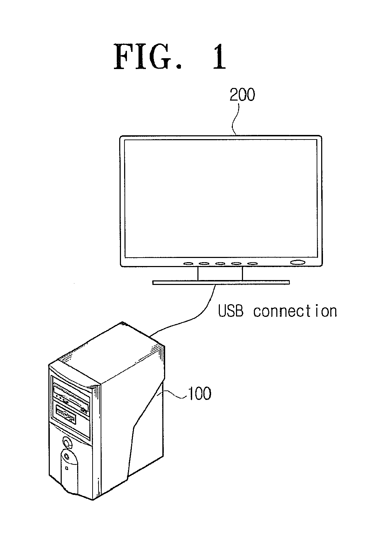

FIG. 1 is a view illustrating a display system applicable to an exemplary embodiment of the present invention. The display system of FIG. 1 may include a PC 100 as a host device, and a USB monitor 200 as a display device.

The USB monitor 200 is connected to the PC 100 according to the USB communication standard, and receives data for communication.

The use of term "USB" in the USB monitor 200 of FIG. 1 intends to include an example where the monitor is connected to the PC 100 for communication compliant with the USB communication standard. However, the USB monitor 200 may be connected to the PC 100 according to a DVI communication standard, instead of the USB communication standard. Accordingly, the word "USB monitor" represents that a monitor is connected to a PC compliant with the USB communication standard, but does not necessarily mean that a monitor is only connectable to a PC compliant with the USB communication standard.

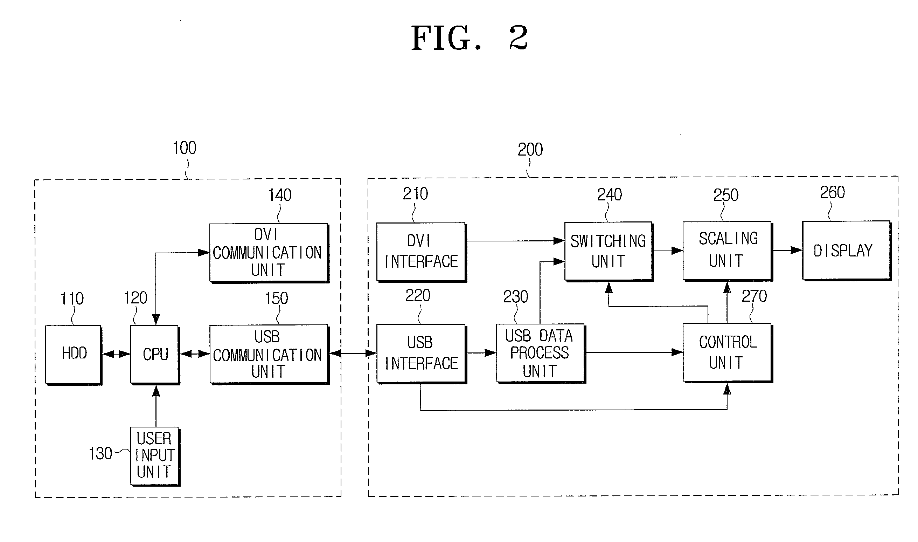

FIG. 2 is a block diagram illustrating a PC and a USB monitor of FIG. 1. Referring to FIG. 2, the PC 100 may include a hard disc drive (HDD) 110, a central processing unit (CPU) 120, a user input unit 130, a DVI communication unit 140, and a USB communication unit 150.

The HDD 110 is a storage media to store programs and data used for the operation of the PC 100.

The user input unit 130 may be implemented as a keyboard or mouse to transfer a user command to the CPU 120.

The DVI communication unit 140 performs data communication with the USB monitor 200 according to a DVI communication standard. The DVI communication unit 140 is not connected to the USB monitor 200 in an exemplary embodiment of the present invention. That is, the USB monitor 200 is connected to the USB communication unit 150, instead of the DVI communication unit 140.

The USB communication unit 150 is connected to the USB monitor 200 for data communication according to the USB communication standard.

The CPU 120 performs a user command input through the user input unit 130. The result of executing the user command is displayed on the USB monitor 200. The CPU 120 generates a screen to be displayed on the USB monitor 120.

The CPU 120 compresses image data of the generated screen, and converts the compressed data into a USB data format. The CPU 120 transmits the converted USB data to the USB monitor 200 through the USB communication unit 150.

The CPU 120 may compress not only the image data of the full generated screen, but also the image data of a part of the generated screen. The CPU 120 compresses image of a part of the generated screen to reduce the amount of USB data transmitted through the USB monitor 200, which will be explained below.

Referring to FIG. 2, the USB monitor 200 may comprise a DVI interface 210, a USB interface 220, a USB data process unit 230, a switching unit 240, a scaling unit 250, a display 260, and a control unit 270.

The DVI interface 210 may perform data communication according to a DVI communication method. The DVI interface 210 is connected to the PC 100 to receive image data from the PC 100 according to the DVI communication method, and to transmit the received image data to the switching unit 240. The DVI interface 210 is not connected to the PC 100 in an exemplary embodiment of the present invention. According to an exemplary embodiment of the present invention, the PC 100 is connected to the USB interface 220, instead of the DVI interface 210.

The USB interface 220 is connected to the PC 100 for data communication according to the USB communication standard. The USB interface 220 receives USB data from the PC 100, and transmits the received USB data to the USB data process unit 230.

The USB data process unit 230 converts the USB data transmitted from the PC 100 through the USB interface 220 into compressed image data, and decompresses the compressed image data. The USB data process unit 230 converts the decompressed image data according to a Transition Minimized Differential Signaling (TMDS) standard, and transmits the converted image data to the switching unit 240.

The switching unit 240 operates to transmit to the scaling unit 250 one of image data output from the DVI interface 210 and image data output from the USB data process unit 230.

The scaling unit 250 scales an image of image data output from the switching unit 240.

The display 260 displays an image scaled by the scaling unit 250 so that a user can view the image.

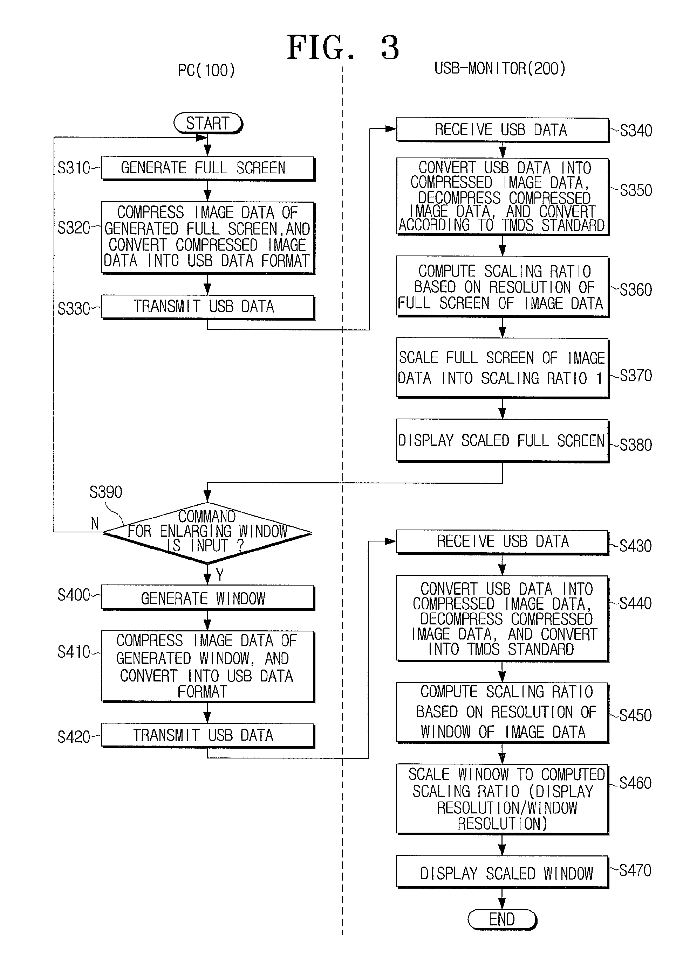

The control unit 270 controls the switching unit 240 and the scaling unit 250, which will be explained in detail with reference FIG. 3.

FIG. 3 is a flowchart illustrating a method for displaying according to an exemplary embodiment of the present invention. The operation performed at the PC 100 is illustrated on the left side, and the operation performed at the USB monitor 200 is illustrated on the right side for convenient understanding.

Referring to FIG. 3, the CPU 120 of the PC 100 generates a full screen to be displayed through the USB monitor 200 (S310). The resolution of the full screen generated by the CPU 120 in operation S310 corresponds to the resolution of the display 260 provided to the USB monitor 200.

The CPU 120 compresses image data of the generated full screen, and converts the compressed image data into a USB data format (S320). The CPU 120 transmits the converted USB data to the USB monitor 200 through the USB communication unit 150 (S330).

The USB interface 220 of the USB monitor 200 receives the USB data transmitted in operation S330, and transmits the received USB data to the USB data process unit 230 (S340).

The USB data process unit 230 converts the USB data transmitted through the USB interface 220 into compressed image data, decompresses the compressed image data, and converts the decompressed image data according to the TMDS standard (S350).

The control unit 270 computes a scaling ratio based on the resolution of a full screen of the image data acquired in operation S350 (S360). The image acquired in operation S350 is a full screen. The resolution of the full screen is a resolution of the display 260, which is described above. The scaling ratio computed in operation S360 is 1 (100%).

The scaling unit 250 scales the full screen of image data compliant with TMDS standard transmitted from the USB data process unit 230 through the switching unit 240 into the scaling ratio 1 computed in operation S360 (S370).

The control unit 270 switches the switching unit 240 to form a path to transmit to the scaling unit 250 the data output from the USB data process unit 230, and controls the scaling unit 250 to perform scaling according to the scaling ratio 1 computed in operation S360.

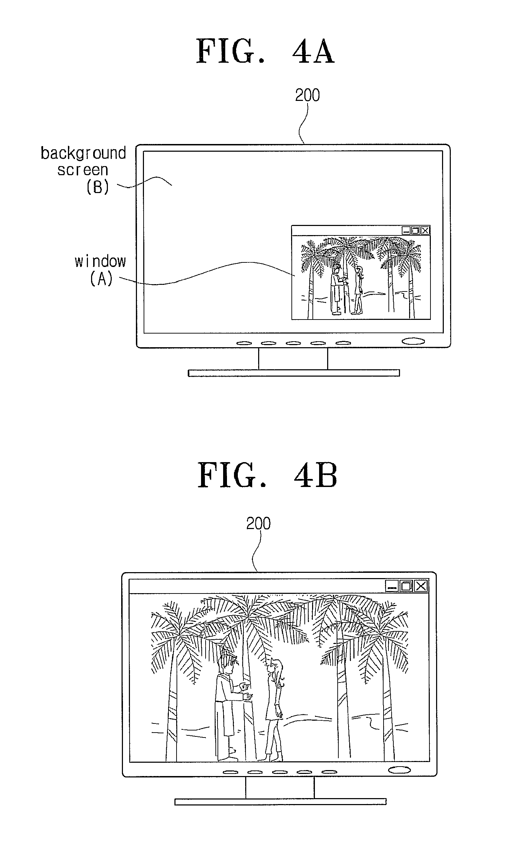

The display 260 displays the full screen scaled in operation S370, so that a user views the screen (S380). FIG. 4A is a view illustrating the screen displayed on the USB monitor 200 by performing operation S380.

Referring to FIG. 4A, the screen on the USB monitor 200 contains a background screen (B) and a window (A). A user may input a command for enlarging the window (A) to a full size of the screen using the user input unit 130.

If a command for enlarging the window (A) is input (S390-Y), the CPU 120 generates the window (A) instead of the full screen as a screen displayed on the USB monitor 200 (S400). The resolution of the window (A) generated in operation S410 is the same as that of the window (A) generated in operation S380.

The CPU 120 compresses image data of the generated window (A), and converts the compressed image data into a USB data format (S410). The CPU 120 transmits the converted USB data to the USB monitor 200 through the USB communication unit 150 (S420).

The USB interface 220 of the USB monitor 200 receives the USB data transmitted in operation S420, and transmits the received USB data to the USB data process unit 230 (S430).

The USB data process unit 230 converts the USB data transmitted through the USB interface 220 into compressed image data, decompresses the compressed image data, and converts the decompressed image data into a TMDS standard (S440).

The control unit 270 computes a scaling ratio based on the resolution of the window (A) of the image data acquired in operation S440 (S450). The screen acquired in operation S440 is a window (A). The resolution of the window (A) is lower than that of the display 260 (referring to FIG. 4A). The scaling ratio computed in operation S450 is greater than 1(100%). The scaling ratio is computed by dividing the resolution of the display 260 by the resolution of the window (A).

The scaling unit 250 scales the screen of the image data of TMDS standard transmitted from the USB data process unit 230 to the scaling ratio computed in operation S450 (S460). That is, in operation S460, the scaling unit 250 enlarges the size of the window (A) to the size of the display 260.

The display 260 displays the screen scaled in operation S460, so that a user views the screen (S470). FIG. 4B is a view illustrating the screen displayed on the USB monitor by performing the operation S470.

Referring to FIG. 4B, the window (A) of FIG. 4A is enlarged on the USB monitor 200. The window (A) is enlarged by the USB monitor 200 not PC 100..

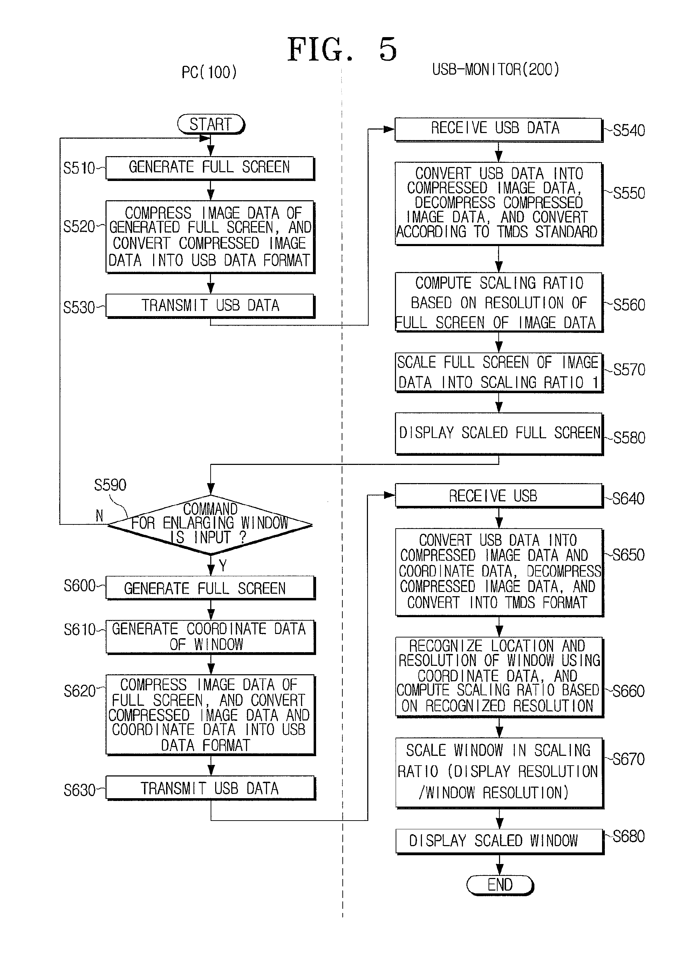

FIG. 5 is a flowchart illustrating a method for displaying according to another exemplary embodiment of the present invention.

The operations S510 to S590 illustrated in FIG. 5 are similar to the operations S310 to S390 illustrated in FIG. 3 and thus will not be explained in detail. Hereinbelow, the operations after operation S600 will be described in detail.

Referring to FIG. 5, if a command for enlarging a window (A) is input (5590-Y), the CPU 120 generates a full screen (S600). The full screen generated in operation S600 contains the window (A) and a background screen (B). The resolution of the full screen generated by the CPU 120 in operation S600 is the same as that of the display 260 on the USB monitor 200.

The CPU 120 generates coordinate data of the window (A) (S610). The coordinate data represents the location of the window (A) on the full screen. The coordinate data includes leftmost-uppermost coordinate (P₁) and bottommost-rightmost coordinate (P₂).

The CPU 120 compresses image data of the full screen generated in operation S600, and converts the compressed image data and the coordinate data generated in operation S610 into a USB data format (S620). The CPU 120 transmits the USB data to the USB monitor 200 through the USB communication unit (S630).

The USB interface 220 of the USB monitor 200 receives the USB data transmitted in operation S630, and transmits the received USB data to the USB process unit 230 (S640).

The USB data process unit 230 converts the USB data transmitted through the USB interface 220 into compressed image data and coordinate data, decompresses the compressed image data, and converts the decompressed image data into a TMDS format (S650).

The control unit 270 recognizes the location and resolution of the window (A) using the coordinate data acquired in operation S650, and computes the scaling ratio based on the recognized resolution (S660). The scaling ratio computed in operation S660 is acquired by dividing the resolution of the display 260 by the resolution of the window (A).

The scaling unit 250 scales the window (A) in the scaling ratio computed in operation S660 (S670). To conduct operation S670, the control unit 270 controls the scaling unit 250 to scale the window (A) of which the location is detected in operation S660 according to the scaling ratio (the resolution of the display 260 / the resolution of the window (A)) computed in operation S660.

The display 260 displays the window (A) scaled in operation S670 so that a user views the window (A) (S680). FIG. 4B illustrates the screen displayed on the display 260 through operation S680.

Referring to FIG. 4B, the window (A) of FIG. 4A is enlarged and displayed on the USB monitor 200. The window (A) is enlarged by the USB monitor 200 not PC 100.

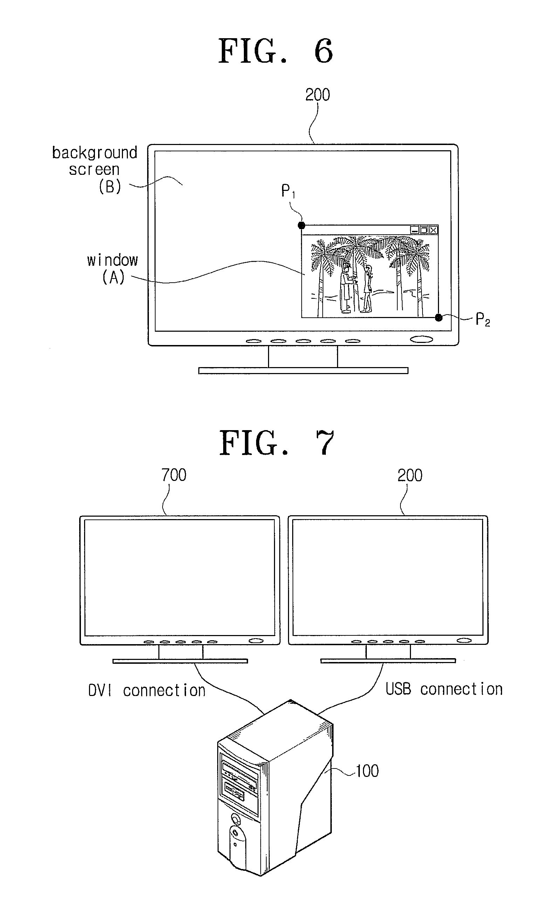

FIG. 7 is a view illustrating a display system according to another exemplary embodiment of the present invention. The display system illustrated in FIG. 7 includes a digital visual interface (DVI) monitor 700 in addition to the components of the display system of FIG. 1.

Referring to FIG. 7, the USB monitor 200 is connected to the PC 100 for data communication according to the USB communication standard, and the DVI monitor 700 is connected to the PC 100 for data communication according to the DVI communication standard.

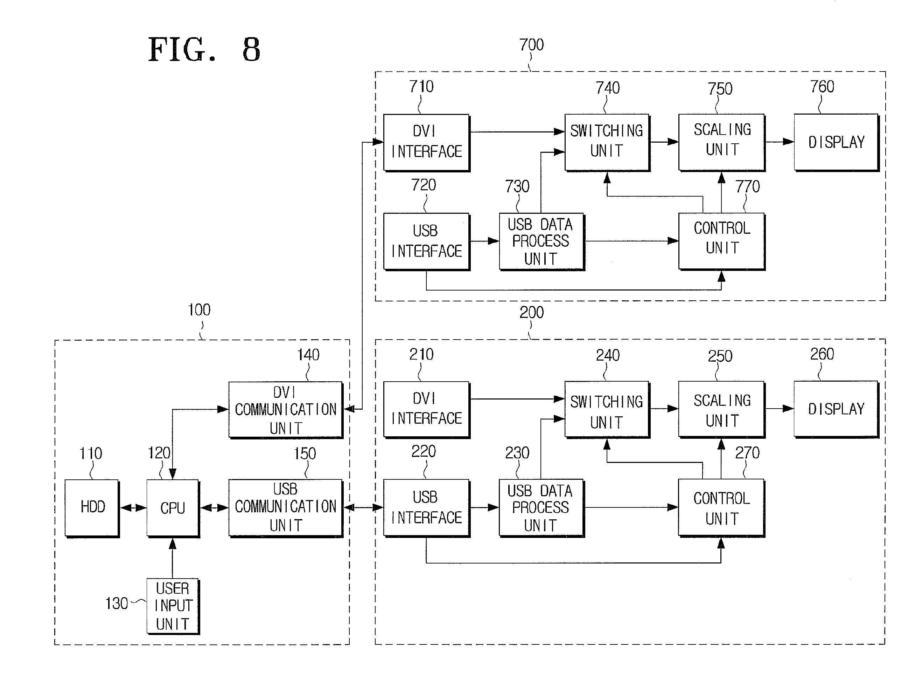

FIG. 8 is a block diagram illustrating the PC 100, the USB monitor 200, and the DVI monitor 700 of FIG. 7.

The elements of the PC 100 and USB monitor 200 illustrated in FIG. 8 may be understood from the explanation of the elements of the PC 100 and USB monitor 200 illustrated in FIG. 2 and thus they will not be explained in detail. It should be noted that the PC 100 of FIG. 8 is connected to the USB monitor 200 through the USB communication unit 150, and is connected to the DVI monitor 700 through the DVI communication unit 140.

The DVI monitor 700 may include a DVI interface 710, a USB interface 720, a USB data process unit 730, a switching unit 740, a scaling unit 750, a display 760, and a control unit 770. The descriptions of elements of the DVI monitor 700 are similar to that of the USB monitor 200 of FIG. 2 and thus will not be described. The DVI monitor 700 of FIG. 8 is connected to the PC 100 through the DVI interface 710.

The use of term "DVI" in the DVI monitor 700 intends to include an example where the monitor is connected to the PC 100 for communication compliant with the DVI communication standard. However, the DVI monitor 700 may be connected to the PC 100 according to the USB communication standard, instead of the DVI communication standard. Accordingly, the word "DVI monitor" represents that a monitor is connected to a PC compliant with the DVI communication standard, but does not necessarily mean that a monitor is only connectable to a PC compliant with the DVI communication standard.

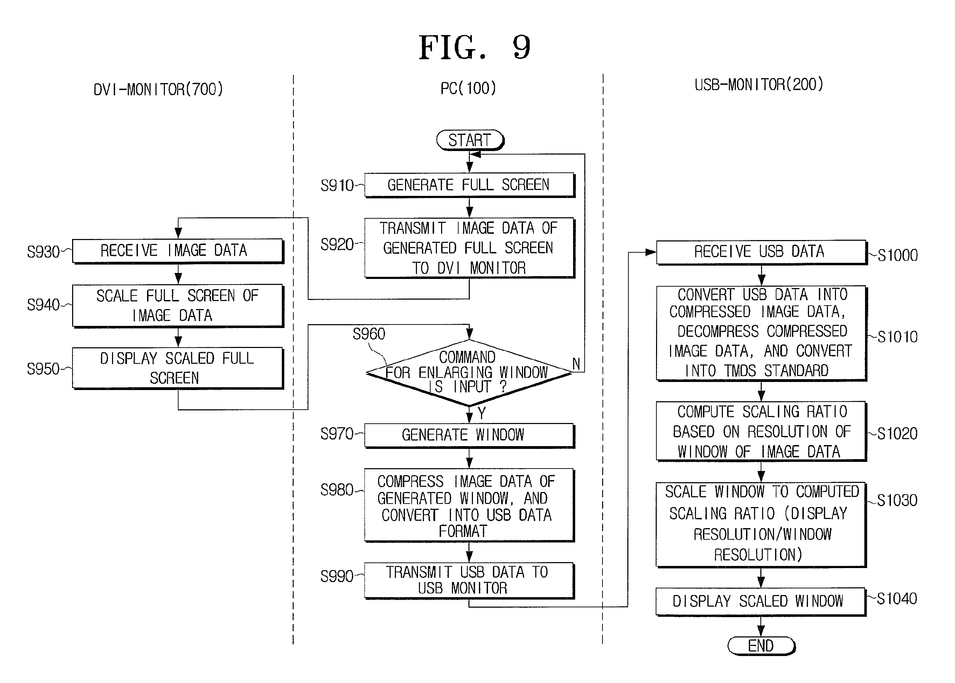

FIG. 9 is a flowchart illustrating a method for displaying according to another exemplary embodiment of the present invention.

Referring to FIG. 9, the operation performed at the PC 100 is illustrated on the center, the operation performed at the DVI monitor 700 is illustrated on the left side, and the operation performed at the USB monitor 200 is illustrated in the right side for convenient understanding. It is supposed that the resolution of the display 760 of the DVI monitor is the same as that of the display 260 of the USB monitor 200 for a convenient description.

The CPU 120 of the PC 100 generates a full screen to be displayed on the DVI monitor 700 (S910). The resolution of the full screen generated by the CPU 120 in operation S910 corresponds to the resolution of the display 760 of the DVI monitor 700.

The CPU 120 transmits the image data of the full screen to the DVI monitor 700 through the DVI communication unit 140 (S920).

The DVI interface 710 of the DVI monitor 700 receives the image data transmitted in operation S920 (S930).

The scaling unit 750 scales the full screen of the image data transmitted from the DVI interface 710 through the switching unit 740 to correspond to the resolution of the display 760 (S940). As the resolution of the full screen generated in operation S910, and transmitted to the DVI monitor 700 in operations S920 and S930 corresponds to the resolution of the display 760, the scaling ratio of 1 (100%) is acquired in operation S940.

To conduct operation S940, the control unit 770 switches the switching unit 740 to form a path to transmit to the scaling unit 750 the image data output from the DVI interface 710.

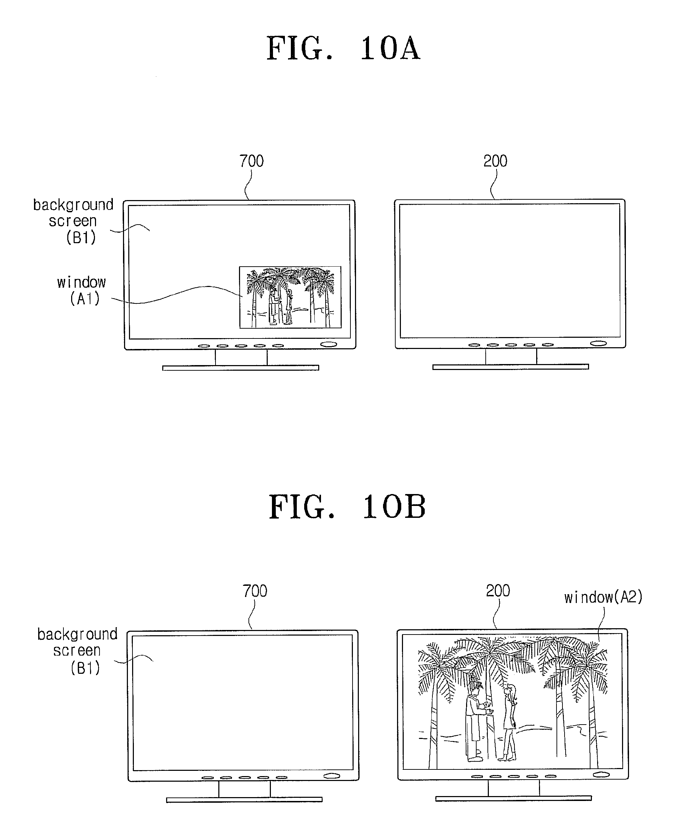

The display 260 displays the full screen scaled in operation S940 so that a user views the screen (S950). FIG. 10A is a view illustrating the result generated by performing operation S950. Referring to FIG. 10A, the screen on the DVI monitor 700 contains a background screen (B) and a window (A1). A user inputs a command for enlarging the window (A1) to a full size of the screen using the user input unit 130.

If a command for enlarging the window (A1) is input (S960-Y), the CPU 120 generates the window (A1) instead of the full screen as a screen displayed on the USB monitor 200 (S970). The resolution of the window (A1) generated in operation S970 is the same as that of the window (A1) displayed in operation S950.

The CPU 120 compresses image data of the generated window (A1), and converts the compressed image data into a USB data format (S980). The CPU 120 transmits the converted USB data to the USB monitor 200 through the USB communication unit 150 (S990).

The USB interface 220 of the USB monitor 200 receives the USB data transmitted in operation S990, and transmits the received USB data to the USB data process unit 230 (S1000).

The USB data process unit 230 converts the USB data transmitted through the USB interface 220 into compressed image data, decompresses the compressed image data, and converts the decompressed image data into TMDS standard (S1010).

The control unit 270 computes a scaling ratio based on the resolution of the window (A1) of the image data acquired in operation S1010 (S1020). The screen acquired in operation S1010 is the window (A1). The resolution of the window (A1) is lower than that of the display 260 (referring to FIG. 10A). The scaling ratio computed in operation S1020 is greater than 1(100%). The scaling ratio is computed by dividing the resolution of the display 260 by the resolution of the window (A1).

The scaling unit 250 scales the window (A1) of the image data of TMDS standard transmitted from the USB data process unit 230 through the switching unit 240 to the scaling ratio computed in operation S1020 (S1030). That is, in operation S1030, the scaling unit 250 enlarges the size of the window (A1) to the size of the display 260.

The display 260 displays the window (A1) scaled in operation S1030, so that a user views the window (A1) (S1040).

FIG. 10B is a view illustrating the result generated by performing operation S1040. Referring to FIG. 10B, the window (A1) on the DVI monitor 700 is displayed on the USB monitor 200 as an enlarged window (A2). The window (A1) is enlarged by the USB monitor 200 not PC 100.

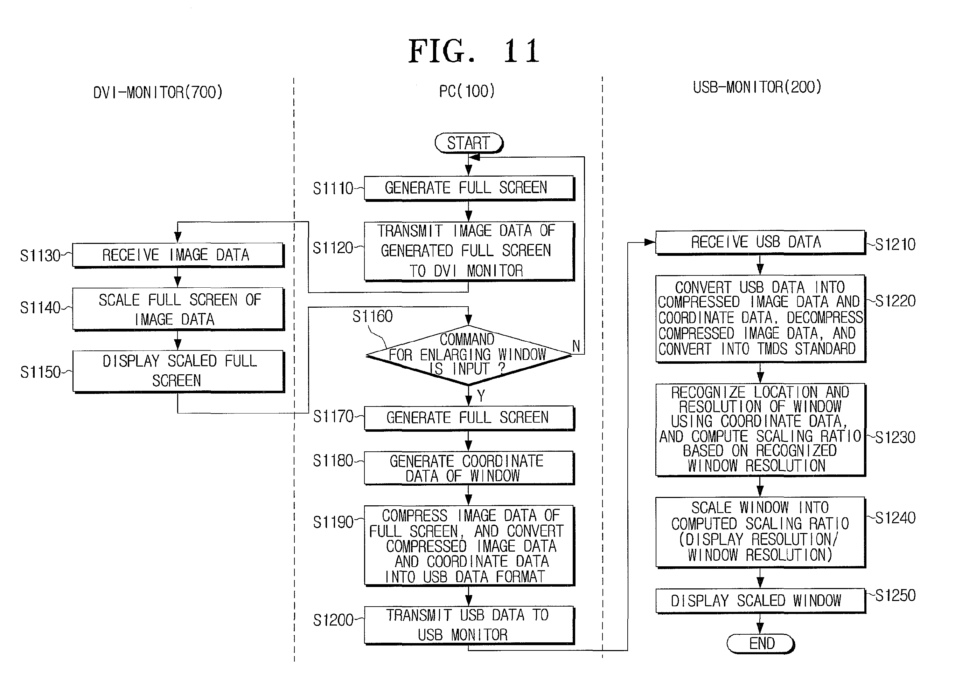

FIG. 11 is a flowchart illustrating a method for displaying according to another exemplary embodiment of the present invention.

The operations S1110 to S1160 illustrated in FIG. 11 are similar to the operations S910 to S960 illustrated in FIG. 9 and thus a description will be omitted. Hereinbelow, the operations after performing operation S1170 will be described in detail.

Referring to FIG. 11, if a command for enlarging the window (A1) is input (S1160-Y), the CPU 120 generates a full screen (S1170). The full screen in operation S1170 contains the window (A1) and the background screen (B1). The resolution of the full screen generated by the CPU 120 in operation S1170 is the same as that of the display 260 of the USB monitor 200.

The CPU 120 generates coordinate data of the window (A1) (S1180).

The CPU 120 compresses image data of the full screen generated in operation S 1180, and converts the compressed image data and the coordinate data generated in operation S1180 into a USB data format (S1190). The CPU 120 transmits the converted USB data to the USB monitor 200 through the USB communication unit 150 (S1200).

The USB interface 220 of the USB monitor 200 receives the USB data transmitted in operation S1200, and transmits the received USB data to the USB data process unit 230 (S1210).

The USB data process unit 230 converts the USB data transmitted through the USB interface 220 into compressed image data and coordinate data, decompresses the compressed image data, and converts the decompressed image data into a TMDS standard (S1220).

The control unit 270 recognizes the location and resolution of the window (A1) using the coordinate data acquired in operation S1220, and computes the scaling ratio based on the recognized window resolution (S1230). The scaling ratio computed in operation S1230 is acquired by dividing the resolution of the display 260 by the resolution of the window (A1).

The scaling unit 250 scales the window (A1) into the scaling ratio computed in operation S1230 (S1240). To conduct operation S1240, the control unit 270 controls the scaling unit 250 to scale the window (A1) of which the location is detected in operation S1230 according to the scaling ratio (the resolution of the display 260 / the resolution of the window (A)) computed in operation S1230.

The display 260 displays the window (A1) scaled in operation S1240 so that a user views the window (A1) (S1250). FIG. 10B is a view illustrating the result generated by performing operation S1040.

Referring to FIG. 10B, the window (A1) on the DVI monitor 700 is enlarged, and the enlarged window (A2) is displayed on the USB monitor 200. The window (A1) is enlarged by the USB monitor 200 not PC 100.

While the exemplary embodiments of the present invention employ the PC and monitor as a host device and a display device, it is merely an exemplary embodiment of the present invention, and other devices are applicable to the present invention.

While a part of an image on a display is enlarged and displayed at another display, it is merely an exemplary embodiment of the present invention. Alternatively a part of an image on a display may be reduced and displayed at another display. That is, a part of an image on a display may be displayed on another display with changed resolution.

While the monitor is connected to the PC according to the DVI communication standard or USB communication standard in the exemplary embodiments of the present invention, this should not be considered limiting. The connection between the monitor and the PC may be embodied according other Display Data Channel (DCC) communication standards such as a D-SUB communication standard besides the above standards.

While the window is described as an image to be enlarged according to exemplary embodiments of the present invention, it is merely an exemplary embodiment of the present invention. An image to be enlarged is not limited to the window. The image may be an image on an area of the image.

According to exemplary embodiments of the present invention, if a window on the DVI monitor is enlarged, and the enlarged widow is displayed on the USB monitor, the window disappears from the DVI monitor (referring to FIG. 10B). It is merely an exemplary embodiment of the present invention. Alternatively, if a window on the DVI monitor is enlarged, and the enlarged widow is displayed on the USB monitor, the window may remain on the DVI monitor.

A window on the DVI monitor is enlarged, and the enlarged widow is displayed on the USB monitor. Alternatively, the enlarged window may be displayed on the DVI monitor.

While a part of an image on the USB monitor is enlarged in the exemplary embodiments of the present invention, this should not be considered limiting. The present invention is applicable when a part of an image on the DVI monitor is enlarged.

A method for inputting a command for enlarging a window should not be considered limiting. A user can input a command for enlarging a window using mouse, keyboard, touch screen, or buttons.

The present invention may be embodied by a computer program.

As described above, according to exemplary embodiments of the present invention, image processing is conducted by a display instead of a host device. Accordingly, it is more efficiently executed that an image is transmitted from a host device to a display.

It is possible to enlarge and display a part of an image on a display at another display. Therefore, a plurality of displays are efficiently used through one host device.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display system comprising:
a host device;
a first display device which communicates with the host device; and
a second display device which communicates with the host device, and
wherein the host device controls the second display device to scale and display an area of the screen displayed on the first display device.

2. The display system of claim 1, wherein the first display device communicates with the host device according to a Display Data Channel (DDC) communication standard.

3. The display system of claim 2, wherein the second display device communicates with the host device according to an Universal Serial Bus (USB) communication standard.

4. The display system of any one of claims 1 to 3, wherein the area of the screen on the first display device corresponds to an image on the area of the screen or a window on the area of the screen.

5. The display system of clam 4, wherein if the window is scaled and displayed on the second display device the window is not displayed on the first display device.

6. The display system of any one of claims 1 to 5, wherein the host device converts image data of the area into a Universal Serial Bus (USB) data format, and transmits the converted image data to the second display device according to the USB communication standard, and the second display device restores the USB data received from the host device into image data, scales the area using the restored image data, and displays the scaled area.

7. The display system of any one of claims 1 to 6, wherein
the host device converts image data of the screen and location information of the area into a Universal Serial Bus (USB) data format; and transmits the converted image data and the location information of the area to the second display device according to the USB communication standard, and
the second display device restores the image data of the area from the image data according to the location information, scales the area using the restored image data of the area, and displays the scaled area.

8. The display system of any one of claims 1 to 7, wherein the second display device scales the area by computing a scaling ratio based on a resolution of the area,
wherein the scaling ratio is computed by dividing a resolution of the second display device by the resolution of the area.

9. The display system of any one of claims 1 to 8, wherein if a user selects the area on the first display device, the host device controls the second display device to scale and to display the scaled area of the screen on the second display device.

10. The display system of any one of claims 1 to 9, at least one of the first display device and the second display device comprising:
a communication interface which is connected to a host device for data communication;
a display which displays a screen received from the host device through the communication interface; and
a control unit which scales an area of the screen on the display, and displays the scaled area on the display.

11. A display method comprising:
displaying a screen on a first display device; and
scaling and displaying on a second display device an area of the screen displayed on the first display device.

12. The display method of claim 11, wherein the scaling and displaying on the second device the area of the screen displayed on the first display device comprises:
transmitting image data of the area to the second display device; and
scaling by the second display device the area using the image data and displaying the scaled area.

13. The display method of claim 12, wherein the transmitting the image data comprises:
converting image data of the area into a Universal Serial Bus (USB) data format; and
transmitting the converted image data to the second display device according to the USB communication standard.

14. The display method of any one of claims 11 to 13, wherein the scaling and displaying on the second display device the area of the screen displayed on the first display device comprises:
transmitting image data of the screen on the first display device and location information of the area to the second display device;
extracting, by the second display device, image data of the area from the image data according to the location information; and
scaling, by the second display device, the area using the extracted image data and displaying the scale area.

15. The display method of claim 14, wherein the transmitting the image data and the location information comprises:
converting the image data of the screen and the location information of the area into a Universal Serial Bus (USB) data format; and
transmitting the converted data to the second display device according to the USB communication standard.
